# EUROPEAN PATENT APPLICATION

(11) **EP 2 985 810 A1**
(43) Date of publication of application: **17.02.2016**
(21) Application number: 15173595.8
(22) Date of filing: 24.06.2015
(51) Int. Cl.: H01M 2/10, H01M 10/04, H01M 10/42, H01M 6/46, H01M 2/20

(54) **BATTERY PACK**

(30) Priority: 13.08.2014 KR 20140105426
(71) Applicant: Samsung SDI Co., Ltd., Yongin-si, Gyeonggi-do (KR)
(72) Inventor: Choi, Jaehyeok, Yongin-si, Gyeonggi-do (KR)
(74) Representative: Gulde & Partner

(57) **Abstract**

A battery pack includes a battery cell unit including a first battery cell and a second battery cell, wherein each of the first battery cell and the second battery cell includes electrode tabs, and electrode tabs of the first battery cell and electrode tabs of the second battery cell face each other, a protective circuit module between the first battery cell and the second battery cell, and a fixing case. The protective circuit module may be electrically connected to the electrode tabs of the first battery cell and the electrode tabs of the second battery cell. In addition, a structure including the first battery cell, the second battery cell, and the protective circuit module between the first battery cell and the second battery cell may have a first side, a second side opposite the first side, a first surface, and a second surface opposite the first surface, and the fixing case may cover at least a portion of at least one of the first side, the second side, the first surface, and the second surface.

## Description

### BACKGROUND

### 1. Field

One or more aspects of embodiments of the present invention relate to a battery pack.

### 2. Description of the Related Art

Developments in wireless internet and communication technologies have contributed to an increase in use of portable devices such as tablet PCs and notebook computers that use batteries as a power source. Most portable computers are small and light, and are widely employed for both personal and business use. Portable computers may have a built-in battery pack as a power source (e.g., a rechargeable secondary battery).

The above-referenced battery pack typically includes a protective circuit module (PCM) for protecting the battery cells from overcharge, overdischarge, or overcurrent. In a battery pack, battery cells are generally arranged in a row, and a PCM may be positioned on a side of the battery pack (e.g., on long front sides of the battery cells) and connected to the battery cells. In addition, when the battery cells are inserted in the case, the case may prevent or reduce the movement of the battery cells.

### SUMMARY

One or more aspects of embodiments of the present invention are directed to a battery pack.

Additional aspects will be set forth in part in the description which follows and, in part, will be apparent from the description, or may be learned by practice of the presented embodiments.

According to one embodiment of the present invention, a battery pack includes a battery cell unit including a first battery cell and a second battery cell, wherein each of the first battery cell and the second battery cell includes electrode tabs, and wherein electrode tabs of the first battery cell and electrode tabs of the second battery cell face each other; a protective circuit module between the first battery cell and the second battery cell, the protective circuit module being electrically connected to the electrode tabs of the first battery cell and the electrode tabs of the second battery cell, wherein the electrode tabs of the first battery cell and the electrode tabs of the second battery cell are in the protective circuit module; and a fixing case, wherein a structure including the first battery cell, the second battery cell, and the protective circuit module between the first battery cell and the second battery has a first side, a second side opposite the first side, a first surface, and a second surface opposite the first surface, and wherein the fixing case covers at least a portion of at least one of the first side, the second side, the first surface, and the second surface.

The electrode tabs of different polarities may face each other.

The fixing case may include a first fixing case covering at least a portion of at least one of the first side, the first surface, and the second surface, and a second fixing case covering at least a portion of at least one of the second side, the first surface, and the second surface.

The first fixing case and the second fixing case may be spaced from each other.

The fixing case may include a rib covering at least a portion of at least one of the first surface and the second surface.

The rib may include a plurality of ribs spaced from each other.

At least one of the plurality of ribs may contact each of the first battery cell, the protective circuit module, and the second battery cell.

The fixing case may include at least one fixing protrusion extending from the rib, a position of the at least one fixing protrusion being at least one of between the first battery cell and the protective circuit module and between the second battery cell and the protective circuit module.

The case may includes at least one fitting protrusions protruding from the ribs toward an inner space of the fixing case. The at least one fitting protrusions respectively positioned on the ribs that face each other at one of the first and second fixing cases may face each other. A distance between two fitting protrusions facing each other may be less than a thickness of the each one of the first and second battery cells 10.

The protective circuit module may have a first surface and a second surface opposite the first surface, and the battery pack may further include a protection tape covering at least one of the first surface and the second surface of the protective circuit module.

The battery pack may further include a label covering at least a portion of each of the battery cell unit, the protective circuit module, and the fixing case.

The label may include a first label contacting to the first surface and a second label contacting to the second surface, and the first and second labels may fix the first and second fixing cases.

The first battery cell and the second battery cell may each be a prismatic secondary battery.

The electrode tabs of the first battery cell and the electrode tabs of the second battery cell may be bent to be inserted into the protective circuit module.

According to one embodiment of the present invention, a battery pack includes a battery cell unit including a first battery cell and a second battery cell, wherein each of the first battery cell and the second battery cell includes electrode tabs, and wherein electrode tabs of the first battery cell face electrode tabs of the second battery cell; a protective circuit module between the first battery cell and the second battery cell, the protective circuit module being electrically connected to the electrode tabs of the first battery cell and the electrode tabs of the second battery cell, wherein the electrode tabs of the first battery cell and the electrode tabs of the second battery cell are in the protective circuit module; and a fixing case, wherein a structure including the first battery cell, the second battery cell, and the protective circuit module between the first battery cell and the second battery has a first side, a second side opposite the first side, a first surface, and a second surface opposite the first surface, wherein the fixing case covers at least a portion of at least one of the first side, the second side, the first surface, and the second surface, and wherein each of the first battery cell and the second battery cell includes a can including an opening, an electrode assembly accommodated in the can and including a first electrode plate, a second electrode plate, and a separator between the first electrode plate and the second electrode plate, a cap plate sealing the opening of the can, and electrode tabs on the cap plate.

The electrode tabs of different polarities may face each other.

The fixing case may include a first fixing case covering at least a portion of at least one of the first side, the first surface, and the second surface, and a second fixing case covering at least a portion of at least one of the second side, the first surface, and the second surface.

The fixing case may include a rib covering at least a portion of at least one of the first surface and the second surface.

The fixing case may include at least one fixing protrusion extending from the rib, a position of the at least one fixing protrusion being at least one of between the first battery cell and the protective circuit module and between the second battery cell and the protective circuit module.

The protective circuit module may have a first surface and a second surface opposite the first surface, and the battery pack may further include a protection tape covering at least one of the first surface and the second surface of the protective circuit module.

The battery pack may further include a label covering at least a portion of each of the battery cell unit, the protective circuit module, and the fixing case.

The electrode tabs of the first battery cell and the electrode tabs of the second battery cell may be bent to be inserted into the protective circuit module.

### BRIEF DESCRIPTION OF THE DRAWINGS

These and/or other aspects will become apparent and more readily appreciated from the following description of the embodiments, taken in conjunction with the accompanying drawings in which:
FIG. 1 is a schematic perspective view of a battery pack according to an embodiment of the present invention;
FIG. 2 is an exploded schematic perspective view of a portion of the battery pack of FIG. 1;
FIG. 3 is an exploded schematic perspective view of a first battery cell shown in FIG. 2; and
FIGS. 4 through 7 illustrate various steps in a process of assembling the battery pack shown in FIG. 1.

### DETAILED DESCRIPTION

The present invention will become apparent with reference to the following description of the embodiments in detail, taken in conjunction with the accompanying drawings. This invention may, however, be embodied in many different forms and should not be construed as limited to the exemplary embodiments set forth herein. Rather, these embodiments are provided so that this disclosure will be thorough and complete and will fully convey the scope of the invention to one of ordinary skill in the art, and the present invention will be defined by the scope of claims. The terms used in the present specification are merely used to describe the exemplary embodiments, and are not intended to limit the present invention. In the present specification, an expression used in the singular encompasses the expression of the plural unless otherwise described. It will be further understood that the terms "comprises" and/or "comprising" used herein specify the presence of stated components, steps, actions, and/or devices, but do not preclude the presence or addition of one or more other components, steps, actions, and/or devices. While such terms as "first" and "second" may be used to describe various components, such components must not be limited to the above terms. The above terms are used only to distinguish one component from another. As used herein, the term "and/or" includes any and all combinations of one or more of the associated listed items. Expressions such as "at least one of," when preceding a list of elements, modify the entire list of elements and do not modify the individual elements of the list. Further, the use of "may" when describing embodiments of the present invention refers to "one or more embodiments of the present invention." Also, the term "substantially" is used herein as a term of approximation and not as a term of degree, and is intended to account for inherent deviations in measured or calculated values, as would be recognized by those of ordinary skill in the art.

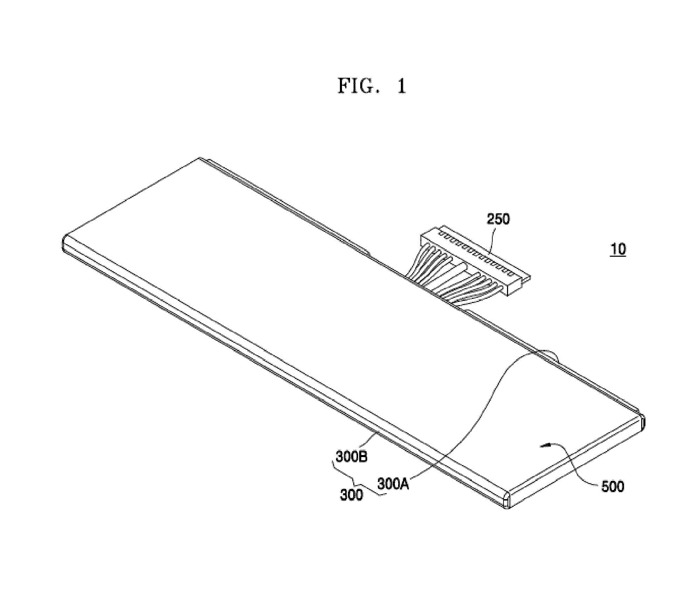

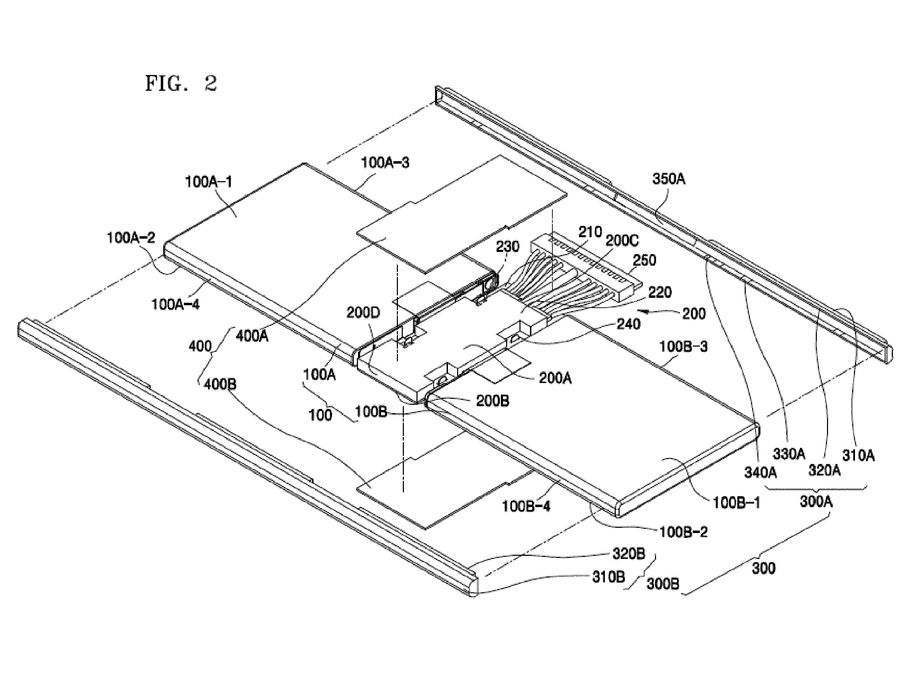

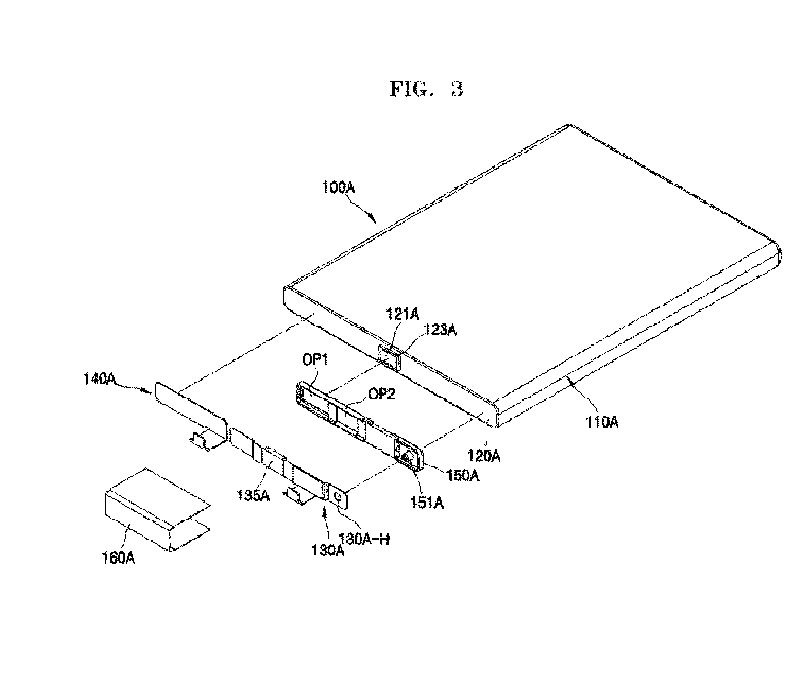

FIG. 1 is a schematic perspective view of a battery pack 10 according to an embodiment of the present invention. FIG. 2 is an exploded schematic perspective view of a portion of the battery pack 10 shown in FIG. 1. FIG. 3 is an exploded schematic perspective view of a first battery cell shown in FIG. 2.

Referring to FIGS. 1 through 3, the battery pack 10 may include a battery cell unit 100, a protective circuit module 200, a fixing case 300, a protection tape 400, and a label 500.

The battery cell unit 100 may include a first battery cell 100A and a second battery cell 100B. The first battery cell 100A and the second battery cell 100B may be prismatic battery cells, but are not limited thereto. In one embodiment, the first battery cell 100A and the second battery cell 100B may be the same as or similar to each other. Hereinafter, the first battery cell 100A will be primarily described for convenience of explanation.

The first battery cell 100A may be a prismatic secondary battery. In one embodiment, the first battery cell 100A includes a can 110A, an electrode assembly accommodated in the can 110A and inserted into the can 110A through an opening in the can 110A, a cap plate 120A sealing the opening of the can 110A, and first and second electrode tabs 130A and 140A.

The can 110A may have a substantially hexahedron shape, with one side being open, and may be manufactured from a metallic material. For example, the can 110A may be manufactured from aluminum or aluminum alloy, but the material for manufacturing the can 110A is not limited thereto. After the electrode assembly is inserted into the can 110A through the opening in the can 110A, the opening may be sealed by the cap plate 120A. The cap plate 120A may be manufactured from a metallic material such as aluminum or aluminum alloy, similar to the material for manufacturing the can 110A, but the material for manufacturing the cap plate 120A is not limited thereto. In one embodiment, the cap plate 120A and the can 110A are coupled to each other by laser welding, such that the can 110A may be tightly sealed (i.e., the can 110A may be airtight or substantially airtight). In one embodiment, the can 110A and the cap plate 120A may be both manufactured from a metallic material.

The electrode assembly may include a first electrode plate and a second electrode plate, each coated with an electrode active material, and a separator between the first electrode plate and second electrode plate. In one embodiment, the electrode assembly may be manufactured by sequentially stacking the first electrode plate, the separator, and the second electrode plate, and then rolling the resulting stack in a jelly-roll form.

While a jelly-rolled electrode assembly has been described herein, the present embodiments are not limited thereto. In one embodiment, the electrode assembly may be a stack, in which the first electrode plate, the separator, and the second electrode plate are sequentially positioned on top of one another.

In one embodiment, an electrode pin 121 A is formed on the cap plate 120A. The first electrode plate may be electrically connected (or coupled) to the electrode pin 121 A, and the second electrode plate may be electrically connected (or coupled) to the cap plate 120A. Since the first electrode plate and the second electrode plate have different polarities, the electrode pin 121 A and the cap plate 120A may also have different polarities. For example, the electrode pin 121 A may have a negative polarity, and the cap plate 120A may have a positive polarity, but the respective polarities of the electrode pin 121 A and the cap plate 120A are not limited thereto. In one embodiment, a gasket 123A may be positioned between the electrode pin 121 A and the cap plate 120A, and the gasket 123A may prevent or reduce the risk of a short-circuit between the electrode pin 121 A and the cap plate 120A.

The first electrode tab 130A and the second electrode tab 140A may each be positioned on the cap plate 120A. In one embodiment, the first electrode tab 130A is positioned in one region of the cap plate 120A, and the second electrode tab 140A is positioned in another region of the cap plate 120A. In one embodiment, the first electrode tab 130A may be electrically connected (or coupled) to the electrode pin 121 A, and the second electrode tab 140A may be electrically connected (or coupled) to the cap plate 120A.

In one embodiment, the first electrode tab 130A may include a thermal cutoff (TCO) 135A. The first electrode tab 130A may be electrically connected to the electrode pin 121 A, and may have the same polarity as that of the electrode pin 121 A (e.g. a negative polarity). When the cap plate 120A has an opposite polarity from that of the first electrode tab 130A (e.g. a positive polarity), an electrical short-circuit is likely to occur between the cap plate 120A and the first electrode tab 130A coupled to the cap plate 120A. Accordingly, a holder 150A may be further placed between the first electrode tab 130A and the cap plate 120A, in order to electrically insulate the first electrode tab 130A and the cap plate 120A from each other.

In one embodiment, the holder 150A is coupled to the cap plate 120A and includes a first opening OP1 through which the first electrode tab 130A may extend to be electrically connected to the electrode pin 121 A. In addition, the holder 150A may further include a second opening OP2 corresponding to the position of the TCO 135A on the first electrode tab 130A, so that the TCO 135A may effectively detect and react to the temperature of the first battery cell 100A.

In one embodiment, the holder 150A may include an insertion protrusion 151 A configured to be coupled to the first electrode tab 130A. When the first electrode tab 130A is placed on the holder 150A, the first electrode tab 130A may be fixed to the insertion protrusion 151 A of the holder 150A (e.g., by inserting the insertion protrusion 151 A into a hole 130A-H formed in the first electrode tab 130A), while being simultaneously welded to the electrode pin 121 A. After the insertion protrusion 151 A has been inserted into the hole 130A-H, heat can be applied to a top portion of the insertion protrusion 151 A, thus melting the portion of the insertion protrusion 151 A and fixing the first electrode tab 130A to the holder 150A. An adhesive tape 160A may be further attached to prevent or reduce the possibility of the first electrode tab 130A detaching from the first battery cell 100A.

The protective circuit module 200 may be electrically connected (or coupled) to the first battery cell 100A and/or the second battery cell 100B, and may control the charging and discharging of the first battery cell 100A and/or the second battery cell 100B. In addition, the protective circuit module 200 may also prevent or reduce the risk of overheating and explosion of the first battery cell 100A and/or the second battery cell 100B that may be caused by overcharge, overdischarge, and/or overcurrent. In one embodiment, the first and second electrode tabs 130A and 140A positioned on one side of the first battery cell 100A may be inserted into terminal holes 230 of the protective circuit module 200, and then may be soldered, thus electrically connecting the first battery cell 100A and the protective circuit module 200. Similarly, the first and second electrode tabs 130B and 140B positioned on one side of the second battery cell 100B may be inserted into terminal holes 240 of the protective circuit module 200, and then may be soldered, thus electrically connecting the second battery cell 100B and the protective circuit module 200.

In one embodiment, the first and second electrode tabs 130A and 140A of the first battery cell 100A and the first and second electrode tabs 130B and 140B of the second battery cell 100B may respectively face each other. In one embodiment, the first and second electrode tabs 130A and 140A of the first battery cell 100A and the first and second electrode tabs 130B and 140B of the second battery cell 100B may be respectively misaligned with each other. In addition, the first and second electrode tabs 130A and 140A of the first battery cell 100A and the first and second electrode tabs 130B and 140B of the second battery cell 100B may be positioned such that the electrode tabs of different polarities face each other. In other words, if the first electrode tab 130A of the first battery cell 100A has a positive polarity, and the second electrode tab 140B of the second battery cell has a negative polarity, the first electrode tab 130A of the first battery cell 100A and the second electrode tab 140B of the second battery cell 100B may be positioned to face each other, with the protective circuit module 200 therebetween. Accordingly, the second electrode tab 140A of the first battery cell 100A having a negative polarity and the first electrode tab 130B of the second battery cell 100B having a positive polarity would also be positioned to face each other, with the protective circuit module 200 therebetween.

In one embodiment, the protective circuit module 200 may include a circuit substrate 210, at least one protection device 220 mounted on the circuit substrate 210, and a connector 250. In one embodiment, the circuit substrate 210 may be placed between the first battery cell 100A and the second battery cell 100B. The protection device 220 may include a safety device including one selected from a passive element such as a resistor and/or a capacitor of the circuit substrate 210, an active element such as a field transistor, and integrated circuits.

In one embodiment, a circuit pattern according to which the first battery cell 100A and the second battery cell 100B may be connected in series and/or in parallel is formed in the circuit substrate 210. Accordingly, when the first and second electrode tabs 130A and 140A of the first battery cell 100A and the first and second electrode tabs 130B and 140B of the second battery cell 100B are respectively directly connected to the terminal holes 230 and 240 formed in the circuit substrate 210, the first battery cell 100A and the second battery cell 100B may be connected in series and/or in parallel, and the charging and discharging operations of the battery cells can be simultaneously controlled in accordance with driving of the protection device 220.

In one embodiment, the connector 250 is located at one end of the protective circuit module 200 and may electrically connect to external electronic equipment. Accordingly, the connector 250 may protrude through an opening 350A formed at one side of a fixing case 300 and may be exposed to the outside.

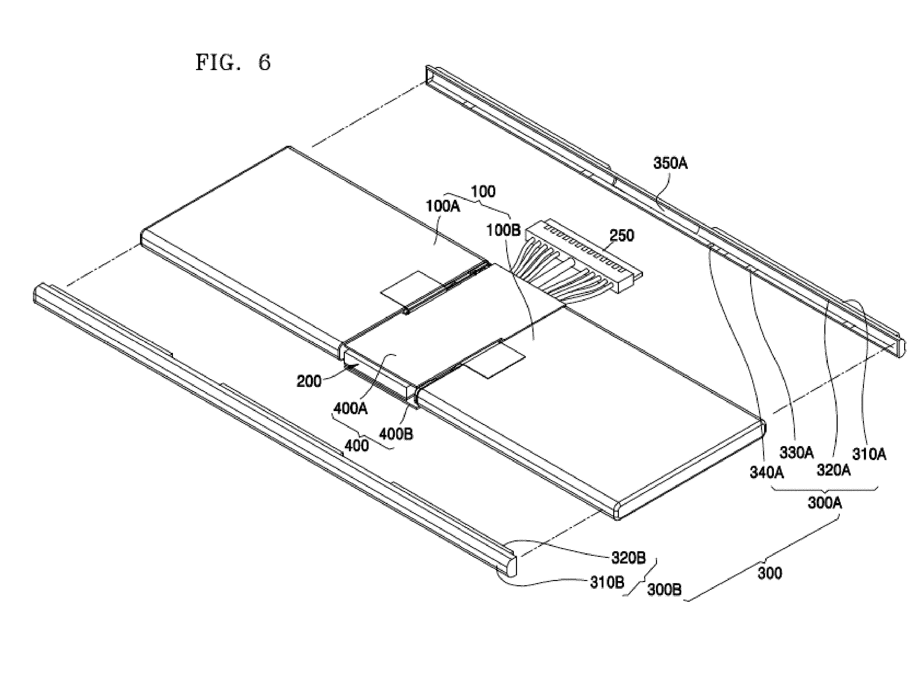

In one embodiment, the battery cell unit 100 and the protective circuit module 200 may each have a first side 200C(e.g., a long front side) and a second side 200D(e.g., a long back side). In addition, the battery cell unit 100 and the protective circuit module 200 may each have a first surface 200A(e.g., a upper surface) and a second surface 200B(e.g., a lower surface). Thus, a structure including the battery cell unit 100 and the protective circuit module 200 may have a first side 200C and a second side 200D and a first surface 200A and a second surface 200B as seen in Fig. 2 or 6. The fixing case 300 may cover portions of at least one of the first sides 100A-3,100B-3,200C, the second sides100A-4,100B-4,200D, the first surfaces 100A-1,1 00B-1,200A, and the second surfaces 100A-2,100B-2,200B of the battery cell unit 100 and the protective circuit module 200. In other words, the fixing case 300 may cover at least a portion of the battery cell unit 100 together with the protective circuit module 200. In one embodiment, the fixing case 300 may include an insulating material. For example, the fixing case 300 may be formed from a polymer compound such as plastic, and may be molded by heat or pressure, but the material and method for forming the fixing case 300 is not limited thereto.

The fixing case 300 may include a first fixing case 300A and a second fixing case 300B spaced from each other. In one embodiment, the first fixing case 300A may cover portions of the first sides 200C, 100A-3, 100B-3 (e.g., long front sides), first surfaces 100A-1,100B-1,200A (e.g., upper surfaces), and second surfaces 100A-2,100B-2,200B (e.g., lower surfaces) of the battery cell unit 100 and the protective circuit module 200, while the second fixing case 300B may cover portions of the second sides 100A-4,100B-4,200D (e.g. long back sides), first surfaces 100A-1,100B-1,200A (e.g. upper surfaces), and second surfaces 100A-2,100B-2,200B (e.g. lower surfaces) of the battery cell unit 100 and the protective circuit module 200.

In one embodiment, the first fixing case 300A may include a first body portion 310A inside which a groove is formed. As described above, the opening 350A (through which the connector 250 of the protective circuit module 200 can be inserted) may be formed in the first fixing case 300A. In addition, the first fixing case 300A may have at least one first rib 320A extending from the first body portion 310A. In one embodiment, the first body portion 310A and the first rib 320A may be formed as an integral body. In one embodiment, the first rib 320A together with the first body portion 310A may cover the first side 100A-3,100B-3 of the battery cell unit 100, the first side 200C of the protective circuit module 200, and at least one of the first surfaces 100A-1,100B-1,200A of the battery cell unit 100 and the protective circuit module 200 and the second surfaces 100A-2,100B-2,200B of the battery cell unit 100 and the protective circuit module 200. In one embodiment, the first rib 320A may extend to cover and support portions of the first surfaces 100A-1,100B-1,200A and/or the second surfaces 100A-2,100B-2,200B of the battery cell unit 100 and the protective circuit module 200. In one embodiment, two first ribs 320A may be provided to face each other and respectively support the first surfaces 100A-1,100B-1,200A and the second surfaces 100A-2,100B-2,200B of the battery cell unit 100 and the protective circuit module 200. Hereinafter, a case where two first ribs 320A are provided will be primarily described for convenience of explanation.

In one embodiment, the first fixing case 300A may further include a first fitting protrusion 330A protruding from one or both of the first ribs 320A toward an inner space of the first fixing case 300A. In one embodiment, a plurality of first fitting protrusions 330A may be positioned on the first ribs 320A, and the first fitting protrusions 330A may be spaced from each other. In one embodiment, the first fitting protrusions 330A respectively positioned on the first ribs 320A that face each other may also face each other, and a distance between the two first fitting protrusions 330A facing each other may be less than a thickness of the first battery cell 100A or the second battery cell 100B. Accordingly, when the first battery cell 100A and the second battery cell 100B are inserted into the first fixing case 300A, the first fixing case 300A may be fixed to the first battery cell 100A and the second battery cell 100B by the first fitting protrusions 330A, thus preventing or reducing the possibility of the first fixing case 300A being separated from the first battery cell 100A and the second battery cell 100B.

In one embodiment, the first fixing case 300A may include at least one first fixing protrusion 340A protruding from at least one of the first ribs 320A and being perpendicular to the first ribs 320A. In one embodiment, the first fixing protrusion 340A may be positioned between at least one of the first battery cell 100A and the protective circuit module 200, and the second battery cell 100B and the protective circuit module 200. Accordingly, the first fixing protrusion 340A may fix the first battery cell 100A to the protective circuit module 200 and/or the second battery cell 100B to the protective circuit module 200, thus preventing or reducing the possibility of the first battery cell 100A, the protective circuit module 200, and the second battery cell 100B being misaligned with respect to each other due to an external shock or the like.

A second fixing case 300B may be similar to the first fixing case 300A. In one embodiment, the second fixing case 300B may have a second body portion 310B inside which a space (or a groove) is formed. The second body portion 310B may shield (or cover) portions of the second sides 100A-4,100B-4,200D(e.g., long back sides) of the first battery cell 100A, the protective circuit module 200, and the second battery cell 100B.

The second fixing case 300B may include at least one second rib 320B extending from the second body portion 310B. In one embodiment, the second rib 320B and the second body portion 310B may be formed as an integral body. The second rib 320B may extend to support (or cover) first surfaces 100A-1,100B-1,200A (e.g., upper surfaces) and/or the second surfaces 100A-2,100B-2,200B (e.g., lower surfaces)of the first battery cell 100A, the protective circuit module 200, and/or the second battery cell 100B.

In one embodiment, a plurality of the second ribs 320B may be provided, and the second ribs 320B may be spaced from each other. At least one of the plurality of the second ribs 320B may contact each of the first battery cell 100A, the protective circuit module 200, and the second battery cell 100B. In other words, at least one of the plurality of the second ribs 320B may contact the protective circuit module 200, the second battery cell 100B, and a region where the protective circuit module 200 contacts and supports the first battery cell 100A.

The second fixing case 300B may have at least one second fitting protrusion and at least one second fixing protrusion protruding from the second ribs 320B. In one embodiment, the second fitting protrusion and the second fixing protrusion are the same as or similar to the first fitting protrusion 330A and the first fixing protrusion 340A, and thus detailed descriptions thereof will not be provided.

In one embodiment, the protection tape 400 may be placed on at least one surface of the protective circuit module 200 and may protect the protective circuit module 200. The protection tape 400 may be formed of a synthetic resin material such as PORON® or an elastic material such as rubber or silicone.

The protection tape 400 may include a first protection tape 400A on the first surface 200A(e.g., the upper surface) of the protective circuit module 200 and a second protection tape 400B on the second surface 200B(e.g., the lower surface) of the protective circuit module 200. In one embodiment, a thickness of the first protection tape 400A may correspond to a difference in thickness between the first battery cell 100A and the protective circuit module 200 and a thickness of the second protection tape 400B may correspond to a difference in thickness between the second battery cell 100B and the protective circuit module 200. Accordingly, when the label 500 is attached to the battery pack, the protection tape 400 may help even out the surface of the battery pack 10 and may reduce the appearance of a step between the first battery cell 100A, the protective circuit module 200, and the second battery cell 100B. In addition, if a shock is applied to the battery pack from the outside, the protection tape 400 may prevent or reduce damage to the protective circuit module 200 by at least partially absorbing the shock.

In one embodiment, the label 500 may cover the exterior of the battery cell unit 100, the protective circuit module 200, and the protection tape 400. The label 500 may be formed as an integral body or there may be a plurality of labels 500. Hereinafter, a case where two labels 500 are provided will be mainly described for convenience of explanation.

The label 500 may include a first label and a second label. The first label (500A) may contact to the first surfaces 100A-1,100B-1,200A (e.g., upper surfaces) of the battery cell unit 100, the protective circuit module 200, and the first protection tape 400A. In one embodiment, the first label(500A) may also contact to the first ribs 320A and the second ribs 320B and may fix together the first fixing case 300A and the second fixing case 300B.

The second label (500B) may contact to the second surfaces 100A-2,100B-2,200B (e.g., lower surfaces) of the battery cell unit 100, the protective circuit module 200, and the second protection tape 400B. In one embodiment, the second label may also contact to the first ribs 320A and the second ribs 320B and may together fix the first fixing case 300A and the second fixing case 300B.

A process of assembling the battery pack 10 will be described hereinafter.

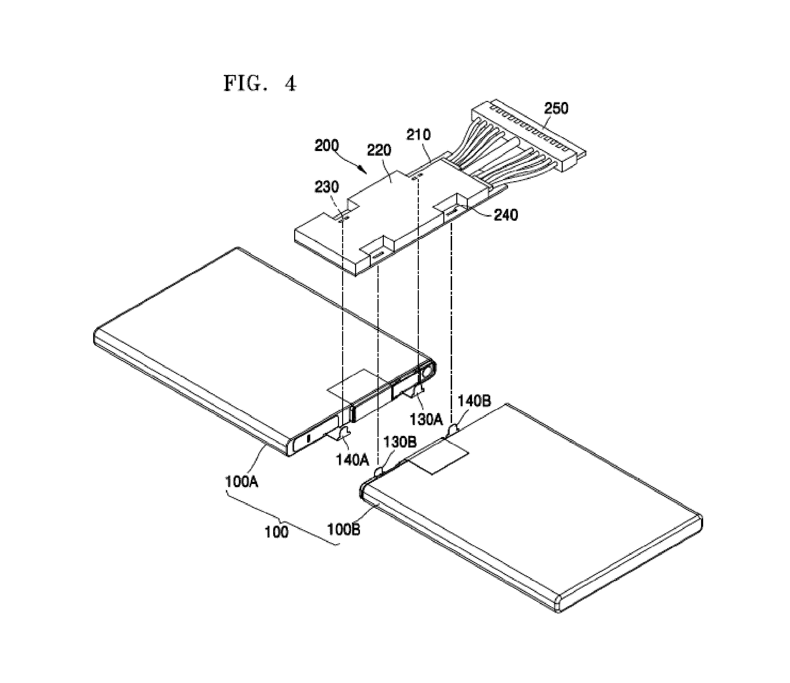

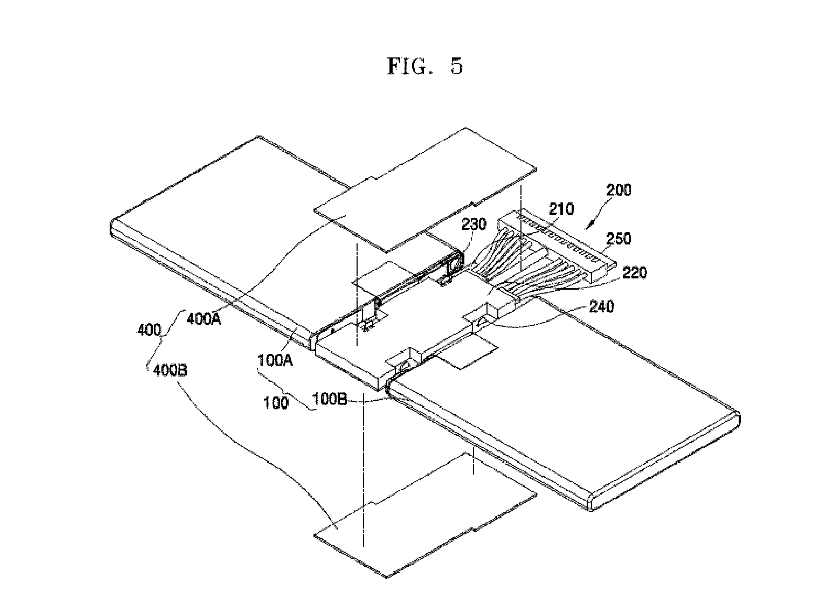

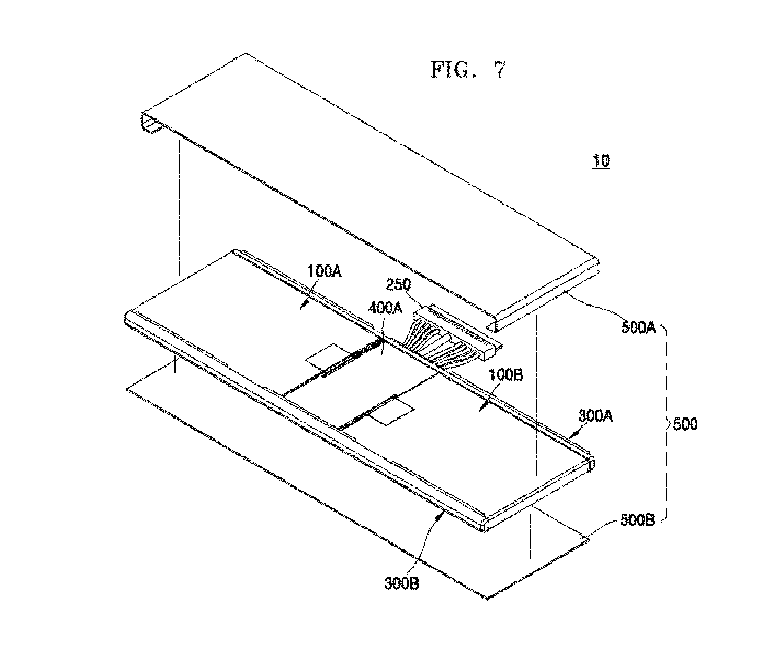

FIGS. 4 through 7 illustrate various steps of the process of assembling the battery pack 10 shown in FIG. 1.

Referring to FIGS. 4 through 7, the first battery cell 100A and the second battery cell 100B may each be manufactured by any suitable method of manufacturing a prismatic secondary battery.

In one embodiment, the first battery cell 100A and the second battery cell 100B may then be connected to the protective circuit module 200. The first electrode tab 130A and the second electrode tab 140A of the first battery cell 100A may be inserted into the terminal holes 230 to be fixed to the protective circuit module 200, and the first electrode tab 130B and the second electrode tab 140B of the second battery cell 100B may be inserted into the terminal holes 240 to be fixed to the protective circuit module 200. In one embodiment, the electrode tabs of the first battery cell 100A and the electrode tabs of the second battery cell 100B may be positioned such that the respective electrode tabs having different polarities face each other.

In one embodiment, the electrode tabs of the first battery cell 100A and the electrode tabs of the second battery cell 100B may be bent to be respectively inserted into the terminal holes 230 and 240 of the protective circuit module 200.

Then, the first protection tape 400A and the second protection tape 400B may be respectively attached to the first (e.g., upper) and second (e.g., lower) surfaces of the protective circuit module 200. In one embodiment, the first protection tape 400A and the second protection tape 400B may each be fixed to the protective circuit module 200 by an adhesive or the like.

Then, the first fixing case 300A and the second fixing case 300B may be inserted to face each other and to cover first and second sides 100A-3,100B-3,200C,100A-4,100B-4,200D (e.g., long front sides and long back sides) of each of the first battery cell 100A, the protective circuit module 200, the protection tape 400, and the second battery cell 100B. In one embodiment, the connector 250 of the protective circuit module 200 may extend to the outside through the opening 350A of the first fixing case 300A. In addition, the first ribs 320A and the second ribs 320B may be respectively positioned on the first and second surfaces 100A-1,100B-1,200A , 100A-2,100B-2,200B (e.g., upper and lower surfaces) of each of the first battery cell 100A, the protective circuit module 200, the protection tape 400, and the second battery cell 100B, and the first fitting protrusions 330A and the second fitting protrusions may press and fix the first battery cell 100A, the protective circuit module 200, the protection tape 400, and the second battery cell 100B by elastic fit. Each of the first fixing protrusion 340A and the second fixing protrusion may be positioned a gap between the first battery cell 100A and the protective circuit module 200 and a gap between the second battery cell 100B and the protective circuit module 200, respectively, and may fix the first battery cell 100A, the protective circuit module 200, and the second battery cell 100B to each other, while maintaining intervals between the first battery cell 100A, the protective circuit module 200, and the second battery cell 100B.

After the above process is completed, the first label 500A and the second label 500B can be attached, for example fitted, thus completing the manufacturing of the battery pack 10.

The battery pack 10 of embodiments of the present invention may have a reduced size due to the protective circuit module 200 positioned between the first battery cell 100A and the second battery cell 100B.

Also, the battery pack 10 may protect the protective circuit module 200 from external shock (e.g., when the battery pack falls down) by positioning the protective circuit module 200 not on a side (e.g., long front r side) of the battery cell unit 100, but in a center of the battery cell unit 100.

In one embodiment, the first ribs 320A, the second ribs 320B, the first fitting protrusions 330A, the second fitting protrusions, the first fixing protrusion 340A, and the second fixing protrusion of the battery pack 10 may firmly fix the battery cell unit 100 and the protective circuit module 200 to each other.

In addition, the simplicity of assembly of the battery pack 10 may improve productivity. Also, the structure of the battery pack 10 may make it easier to disassemble the first battery cell 100A and the second battery cell 100B from the fixing case 300 for repairs in case of breakdown or damage.

A battery pack according to one or more embodiments of the present invention may optimize space by having a compact structure.

It is clear for a person skilled in the art that the disclosed embodiments can also be combined where possible.

## Claims

1. A battery pack (10) comprising:
a battery cell unit (100) comprising a first battery cell (100A) and a second battery cell (100B), wherein each of the first battery cell (100A) and the second battery cell (100B), comprises electrode tabs (130A, 140A, 130B, 140B), and wherein electrode tabs (130A, 140A) of the first battery cell (100A) face electrode tabs (130B, 140B) of the second battery cell (100B);
a protective circuit module (200) between the first battery cell (100A) and the second battery cell (100B), the protective circuit module (200) being electrically connected to the electrode tabs (130A, 140A) of the first battery cell (100A) and the electrode tabs (130B, 140B) of the second battery cell (100B),, wherein the electrode tabs (130A, 140A) of the first battery cell (100A) and the electrode tabs (130B, 140B) of the second battery cell (100B) are in the protective circuit module (200); and
a fixing case (300),
wherein a structure including the first battery cell (100A), the second battery cell (100B), and the protective circuit module (200) between the first battery cell (100A) and the second battery cell (100B) comprises a first side(100A-3,100B-3,200C), a second side(100A-4,100B-4,200D) opposite the first side(100A-3,100B-3,200C), a first surface(100A-1,100B-1,200A), and a second surface(1 00A-2,100B-2,200B) opposite the first surface(1 00A-1,100B-1,200A), and
wherein the fixing case (300) covers at least a portion of at least one of the first side(100A-3,100B-3,200C), the second side(100A-4,100B-4,200D), the first surface(100A-1,100B-1,200A), and the second surface(100A-2,100B-2,200B).

2. The battery pack of claim 1, wherein the electrode tabs (130A, 140A, 130B, 140B) facing each other have different polarities from each other.

3. The battery pack of claim 1 or 2, wherein the fixing case (300) comprises
a first fixing case (300A) covering at least a portion of at least one of the first side(100A-3, 100B-3,200C), the first surface(100A-1,100B-1,200A), and the second surface(100A-1,100B-1,200A); and
a second fixing case (300B) covering at least a portion of at least one of the second side(100A-4,100B-4,200D), the first surface(100A-1,100B-1,200A), and the second surface(100A-2,100B-2,200B).

4. The battery pack of claim 3, wherein the first fixing case (300A) and the second fixing case (300B) are configured to be spaced from each other.

5. The battery pack of one of the preceding claims, wherein the fixing case (300) comprises a rib (320A, 320B) covering at least a portion of at least one of the first surface(100A-1,100B-1,200A) and the second surface(100A-2,100B-2,200B).

6. The battery pack of claim 5, wherein the rib (320A, 320B) comprises a plurality of ribs (320A, 320B) spaced from each other.

7. The battery pack of claim 6, wherein at least one of the plurality of ribs (320A, 320B) are configured to contact each of the first battery cell (100A), the protective circuit module (200), and the second battery cell (100B).

8. The battery pack of one of claims 5 to 7, wherein the fixing case (300) comprises at least one fixing protrusion (340A) extending from the rib (320A), a position of the at least one fixing protrusion (340A) being at least one of between the first battery cell (100A) and the protective circuit module (200) and between the second battery cell (100B) and the protective circuit module (200).

9. The battery pack of one of claims 5 to 8, wherein the case (300) includes at least one fitting protrusions (330A) protruding from the ribs (320A) toward an inner space of the fixing case (300), the at least one fitting protrusions (330A) respectively positioned on the ribs (320A) that face each other at one of the first and second fixing cases (300A, 300B) facing each other and a distance between two fitting protrusions (330A) facing each other being less than a thickness of the each one of the first and second battery cells (100A, 100B).

10. The battery pack of one of the preceding claims , wherein the protective circuit module (200) comprises a first surface(200A) and a second surface(200B) opposite the first surface(200A), and
wherein the battery pack (10) further comprises a protection tape (400) covering at least one of the first surface(200A) and the second surface(200B) of the protective circuit module (200).

11. The battery pack of one of the preceding claims , wherein the battery pack (10) further comprises a label (500) covering at least a portion of each of the battery cell unit (100), the protective circuit module (200), and the fixing case (300).

12. The battery pack of claim 11, wherein the label (500) includes a first label (500A) contacting to the first surface(200A) and a second label (500B) contacting to the second surface(200B), and
the first and second labels (500A, 500B) are configured to fix the first fixing case (300A) and the second fixing case (300B).

13. The battery pack of one of the preceding claims, wherein the first battery cell (100A) and the second battery cell (100B) are each a prismatic secondary battery.

14. The battery pack of one of the preceding claims , wherein the electrode tabs (130A, 140A) of the first battery cell (100A) and the electrode tabs(130B, 140B), of the second battery cell (100B) are configured to be bent to be inserted into the protective circuit module (200).

15. The battery pack of one of the preceding claims:
wherein each of the first battery cell and the second battery cell comprises:
a can comprising an opening;
an electrode assembly accommodated in the can and comprising a first electrode plate, a second electrode plate, and a separator between the first electrode plate and the second electrode plate;
a cap plate sealing the opening of the can; and
electrode tabs on the cap plate.
